# FASCICULE DE BREVET EUROPEEN

(11) **EP 2 250 561 B1**
(45) Date de publication et mention de la délivrance du brevet: **17.10.2018**
(21) Numéro de dépôt: 09726539.1
(22) Date de dépôt: 12.03.2009
(51) Int. Cl.: G06F 11/10

(54) **DISPOSITIF PERMETTANT L'UTILISATION D'UN COMPOSANT PROGRAMMABLE DANS UN ENVIRONNEMENT RADIATIF NATUREL**
VORRICHTUNG ZUR VERWENDUNG EINER PROGRAMMIERBAREN KOMPONENTE IN EINER NATÜRLICHEN STRAHLUNGSUMGEBUNG
DEVICE FOR USING PROGRAMMABLE COMPONENT IN NATURAL RADIATIVE ENVIRONMENT

(30) Priorité: 14.03.2008 FR 0851689
(43) Date de publication de la demande: 17.11.2010
(73) Titulaire: AIRBUS OPERATIONS, 31060 Toulouse (FR)
(72) Inventeur: GRIMONPONT, Bruno, F-31470 Bonrepos/Aussonnelle (FR); HAZO, Samuel, F-31400 Toulouse (FR)
(74) Mandataire: Santarelli
(86) Numéro de dépôt international: PCT/FR2009/000256
(87) Numéro de publication internationale: WO 2009/122029

(56) Documents cités:
- US-A1- 2003 097 628
- US-A1- 2004 237 021
- US-B1- 7 036 059
- US-B1- 7 111 224

## Description

La présente invention concerne un dispositif permettant l'utilisation d'un composant programmable dans un environnement radiatif naturel. Elle s'applique, en particulier, aux composants de type FPGA (acronyme de « Field-Programmable Gate Array » pour réseau de portes programmables in-situ).

La principale source de rayonnement est liée au rayonnement galactique du soleil. Le flux de ce rayonnement change selon l'altitude et la latitude, par l'effet de la magnétosphère, de l'atmosphère et de la ceinture de Van Allen, par exemple, qui constituent des obstacles et des filtres. Ce rayonnement comporte, dans l'espace et à altitude élevée, principalement les ions lourds et les protons et, dans l'atmosphère, les neutrons sont dominants.

Au niveau de la mer, le flux des neutrons est approximativement 300 fois inférieur à ce qu'il est à une altitude de dix kilomètres. Cependant, même au niveau du sol, des problèmes liés à ce rayonnement, appelés « SEE » (acronyme de « Single Event Effect » pour effet d'événement unique) sont constatés sur quelques systèmes, en raison de l'intégration croissante des composants. Cette question est susceptible de devenir un enjeu dans les années à venir.

Les effets singuliers liés aux rayonnements correspondent aux phénomènes déclenchés par le passage d'une particule unique. Parmi ces effets, on distingue les défauts transitoires ou erreurs logicielles, connues sous le nom de « SEU » (acronyme de « Single Event Upset » pour perturbation par un événement unique) qui consiste en une modification indésirable de l'information fournie par un composant électronique, sans altération de ce dernier, sous l'effet d'une particule de haute énergie.

Comparé aux ions lourds, les neutrons ne déposent pas leur énergie directement. Ils doivent interagir avec du silicium pour produire les ions secondaires. Tous les ions déposent des charges dans le silicium et produisent un SEE dans le composant électronique.

L'intégration et la puissance de calcul demandé sur les calculateurs embarqués, imposent l'utilisation de composant complexe telles que FPGA, CPLD (acronyme de « Complex Programmable Logic Device » pour circuit logique programmable complexe) et ASIC (acronyme de "Application-Specific Integrated Circuit » pour circuit intégré spécifique à une application)

Les FPGA sont très répandus dans l'électronique, car ils offrent un ratio ressources/coût très favorable. Les technologies des FPGA sont classées selon les trois types suivants :
- anti-fuse,
- flash et
- RAM-based (RAM étant l'acronyme de « Random Acces Memory » pour mémoire à accès aléatoire).

A ce jour, pour palier au problème de l'impact des Neutrons cosmiques, appelé « SEU » (acronyme de « Single event upset » pour perturbation par un événement unique) dans des environnements radiatifs naturels, les deux premières technologies citées sont souvent utilisées, car tolérants aux fautes.

Pour se prémunir de l'impact du rayonnement radiatif naturel dans l'électronique, une des solutions est d'utiliser des composants FPGA de technologie anti-fuse ou flash. Ces composants, grâce à leur technologie et gravure de cellule, sont robustes aux « bits flips » et, en conséquence, aucune protection n'est requise.

Cependant leurs inconvénients comportent que :
- certaines technologies comme antifuse ne permettent pas la reprogrammation du composant ; il y a, alors, obligation de dessouder et de changer de composant en cas d'évolution ;
- il y a peu de fournisseurs et donc une gestion de la dissemblance difficile ;
- du fait de la technologie, les performances, notamment en termes de fréquences, sont limitées ;
- du fait de la technologie, les matrices proposées sont limitées ;
- les outils sont moins innovants, car ils ont moins d'utilisateurs et donc moins de correcteurs (« debuggeurs »).

Le FPGA de type RAM-based, par sa technologie, est performant, offre des matrices logiques importantes et une reprogrammation in-situ (sur carte). De ce fait, il est fortement utilisé dans l'industrie. Cependant, il possède l'inconvénient d'être sensible au « bit-flip », c'est-à-dire changement de valeur d'une unité binaire, ou bit, ce qui rend difficile à ce jour son utilisation dans des environnements radiatifs.

Le document US 7 036 059 décrit un composant programmable doté de fonctions logiques redondantes et de moyens de détection d'erreurs dans l'une de ces fonctions logiques. Cependant, la redondance des fonctions logiques impose une complexité et un coût importants des composants programmables.

La présente invention vise à remédier à ces inconvénients. A cet effet, un aspect de l'invention est un dispositif tel que défini dans la revendication indépendante 1. Un autre aspect est une méthode comme défini dans la revendication indépendante 8. D'autres modes de réalisation de l'invention sont spécifiés dans les revendications dépendantes attenantes.

Grâce à ces dispositions, on obtient une architecture tolérante aux fautes (« Fault tolerant ») pouvant utiliser des composants FPGA de type RAM-Based. En effet, les moyens succinctement décrits ci-dessus, permettent de détecter l'impact d'une agression sur le composant programmable, et dans le cas d'une agression, d'interdire la diffusion des informations à l'extérieur de ce composant, pendant que l'erreur est corrigée.

La présente invention trouve, notamment, des applications dans les systèmes électroniques critiques tels que les systèmes avioniques, spatiaux, nucléaires, automobiles, médicaux ou ferroviaires.

Selon des caractéristiques particulières, le dispositif objet de la présente invention, tel que succinctement exposé ci-dessus, comporte un moyen de mémorisation double des données conservées dans ledit composant. Ainsi, dans le cas où on utilise une mémoire pour de la sauvegarde de données, en doublant la sauvegarde des données en mémoire, on reprend rapidement un état fonctionnel stable.

Selon des caractéristiques particulières, le moyen de détection d'erreur compare au moins deux mémorisations de données. Ainsi, le moyen de détection d'erreur comporte un moyen de relecture du contenu de la mémoire du composant et de comparaison à un contenu de référence. Cette relecture et cette comparaison sont connues sous le nom de « readback ».

Selon des caractéristiques particulières, le moyen de blocage est adapté à bloquer les sorties numériques de la fonction logique réalisée par ledit composant. En effet, ce sont les signaux émis sur ces sorties qui peuvent être perturbées, en cas de bit-flip sur le composant.

Selon des caractéristiques particulières, le moyen de détection d'erreur comporte un moyen de vérification de données redondantes.

Selon des caractéristiques particulières, le moyen de correction d'erreur met en oeuvre des données redondantes.

Ces données redondantes permettent de contrôler l'intégrité des données conservée par le composant programmable, par blocs de données. A chaque bloc de données est associé un bloc de contrôle appelé « code de contrôle », par exemple le code « CRC » (acronyme de « Cyclic Redundancy Check » pour contrôle de redondance cyclique).

Selon des caractéristiques particulières, le moyen de correction d'erreur est adapté à effectuer une reconfiguration totale du composant. On note que la re-programmation totale du FPGA peut être effectuée avec sa matrice de référence. Ceci a pour effet de corriger l'erreur détectée et de réinitialiser le composant. Les données de sortie du FPGA ne restent alors erronées que pendant une durée correspondant au délai de détection et au délai de redémarrage du système.

Selon des caractéristiques particulières, le moyen de correction d'erreur est adapté à effectuer une reconfiguration partielle du composant. Cette reconfiguration partielle correspond à une correction locale de la matrice ou a été détectée l'erreur. Cette reconfiguration ne nécessite pas de ré-initialisation du système. Après correction, le FPGA reprend un fonctionnement normal.

Selon des caractéristiques particulières, le moyen de blocage comporte un moyen de conservation, en mémoire tampon, des données générées par le composant et/ou par des composants interfacés entre le composant et la mémoire tampon. Cette conservation en mémoire tampon est connue sous le nom de « Bufferisation ».

Selon des caractéristiques particulières, le moyen de conservation possède une latence supérieure ou égale au délai maximal de détection d'une erreur par le moyen de détection d'erreur. Ainsi, aucune donnée erronée ne peut sortir du dispositif.

Selon des caractéristiques particulières, le dispositif objet de la présente invention, tel que succinctement exposé ci-dessus comporte un moyen de détection de continuité d'une erreur et un moyen de désactivation d'une zone mémoire du composant adapté à interdire l'utilisation d'une zone mémoire comportant l'erreur continue, en cas de telle détection de continuité d'une erreur. On interdit ainsi l'utilisation d'une partie de la mémoire endommagée irrémédiablement.

Selon des caractéristiques particulières, le dispositif objet de la présente invention, tel que succinctement exposé ci-dessus comporte un moyen de détection de continuité d'une erreur et un moyen de désactivation du moyen de détection d'erreur en cas de telle détection de continuité d'une erreur. On évite ainsi un blocage du système incorporant le composant.

Selon des caractéristiques particulières, le dispositif objet de la présente invention, tel que succinctement exposé ci-dessus, comporte un moyen de diagnostic adapté à compter les erreurs détectées par le moyen de détection d'erreur. Un tel moyen de diagnostic est connu sous le nom de « BITE ».

Selon des caractéristiques particulières, le moyen de blocage comporte un moyen de conservation, dans une mémoire tampon, de données générées par le composant et/ou par des composants interfacés entre le composant et la mémoire tampon.

Selon des caractéristiques particulières, le moyen de conservation possède une latence supérieure ou égale au délai maximal de détection d'une erreur par le moyen de détection d'erreur.

Selon des caractéristiques particulières, le dispositif objet de la présente invention, tel que succinctement exposé ci-dessus, comporte un moyen de détection de continuité d'une erreur et un moyen de désactivation d'une zone mémoire du composant adapté à interdire l'utilisation d'une zone mémoire comportant l'erreur continue, en cas de telle détection de continuité d'une erreur.

Selon des caractéristiques particulières, le dispositif objet de la présente invention, tel que succinctement exposé ci-dessus, comporte un moyen de détection de continuité d'une erreur et un moyen de désactivation du moyen de détection d'erreur, en cas de telle détection de continuité d'une erreur.

Selon des caractéristiques particulières, le moyen de détection de continuité d'une erreur comporte un moyen de diagnostic adapté à compter les erreurs détectées par le moyen de détection d'erreur.

Selon des caractéristiques particulières, le composant programmable n'a pas accès aux espaces mémoire de référence.

Selon des caractéristiques particulières, le dispositif objet de la présente invention, tel que succinctement exposé ci-dessus, comporte un moyen de permutation adapté à permuter l'espace mémoire de travail et un espace mémoire de référence à la suite d'un cycle de lecture complet des données à protéger sans détection d'erreur.

Selon des caractéristiques particulières, le dispositif objet de la présente invention, tel que succinctement exposé ci-dessus, comporte un moyen de permutation adapté à permuter l'espace mémoire de travail et un espace mémoire de référence à la suite de la détection d'une erreur dans l'espace mémoire de travail.

D'autres avantages, buts et caractéristiques de la présente invention ressortiront de la description qui va suivre, faite, dans un but explicatif et nullement limitatif, en regard des dessins annexés, dans lesquels :
- la figure 1 représente, schématiquement, un mode de réalisation particulier du dispositif objet de la présente invention et
- la figure 2 représente, sous forme d'un logigramme, des étapes mises en oeuvre dans un mode de réalisation particulier du procédé objet de la présente invention.

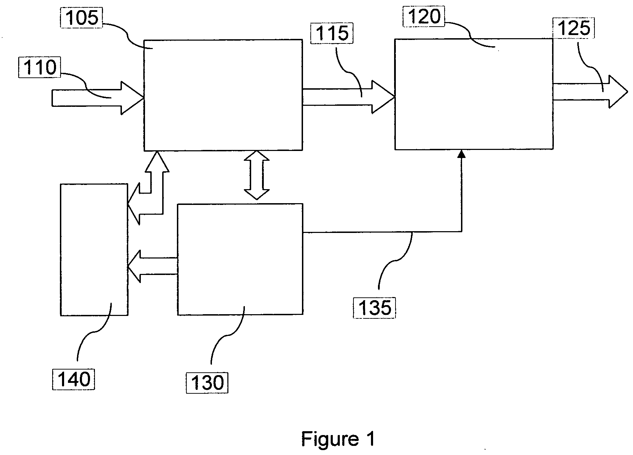

Comme on l'observe en figure 1, dans un mode de réalisation particulier du dispositif objet de la présente invention, un composant programmable 105 présentant une entrée de données 110 et une sortie de données 115 reliée à une mémoire tampon 120 possédant une sortie de données 125. Un moyen de détection et correction d'erreur 130 est relié au composant 105, à la mémoire tampon 120, par l'intermédiaire d'un lien 135, et à une mémoire 140, elle-même reliée au composant 105.

Le composant programmable 105 est, dans le mode de réalisation décrit et représenté, un FPGA de type RAM-based, composant FPGA dont la matrice de configuration est de technologies RAM, c'est à dire volatile. Le composant 105 réalise une fonction logique de type connu dans un système électronique ou informatique (non représenté). Ce composant 105 peut avoir ces ressources altérées suite à un changement de valeur binaire, ou « bit-flip », du à l'environnement radiatif du composant 105.

L'entrée de données 110 représente les entrées numériques de la fonction logique du composant 105. La sortie de données 115 représente les sorties numériques de la fonction logique du composant 105. Ces sorties peuvent être perturbées, en cas de changement de valeur binaire, ou « bit-flip », due à l'environnement radiatif du composant 105.

Le moyen de détection et correction d'erreur 130 est adapté à détecter une erreur survenant dans le composant 105, suite à un changement de valeur binaire dû à l'environnement radiatif du composant 105. Ce moyen de détection et correction d'erreur 130 peut utiliser, par exemple :
- soit une relecture du contenu du composant 105 et comparaison à une matrice de référence conservée en mémoire 140, comme exposé ci-dessous (« Readback »),
- soit une vérification par codes de contrôle, par exemple des codes de redondance cyclique CRC, contenant des données redondantes par rapport aux blocs de données auxquels ils se réfèrent.

En effet, un SEU sur le composant FPGA 105 peut entraîner une erreur fonctionnelle, et cette erreur peut se propager sur les sorties 115 et/ou sur la mémoire de données 140.

Pour palier au problème de corruption de données dans la mémoire 140, préférentiellement, on divise son espace mémoire en N parties, un espace de travail et N-1 espaces de référence. Le composant 105 n'ayant pas accès aux espaces de référence, il ne peut donc « polluer » que l'espace de travail de la mémoire 140.

Le moyen de détection et correction d'erreur 130 permet de détecter une erreur dans le composant FPGA 105, de bloquer les sorties par l'intermédiaire de la liaison 135 et du buffer 120, et de gérer les espaces de travail et de références du composant 140. Un espace de travail pollué est désactivé temporairement puis peut redevenir une espace de référence (quand, après correction d'erreur, il ne se trouve pas d'erreur continue et permanente dans cet espace).

Dans chacun des espaces de référence, chaque donnée à protéger est écrite une fois et le moyen de détection et correction 130 lit chacune des valeurs de l'espace de travail et considère qu'elle est erronée lorsqu'elle est différente des valeurs de référence correspondantes. On note que, si on veut être tolérant à un nombre « n » d'erreurs unitaires, ou « bit-flip », dans des cycles successifs, on réalise un nombre supérieur ou égal à « n+1 » de copies de chaque données binaire.

A la suite d'un cycle de lecture complet des données à protéger dans le composant 105, sans détection d'erreur, on permute l'espace de travail, où sont lues les données utilisées par la fonction logique, et un des espaces de référence, où sont conservées les duplications des données à protéger. De même, à la suite de la détection d'une erreur dans l'espace de travail, on commute un espace de référence en l'espace de travail.

Dans des variantes, le moyen de détection et correction utilise, de manière connue, des codes de contrôle pour détecter et, éventuellement, corriger les valeurs erronées.

Dans les deux cas, entre l'instant de détection d'une erreur et l'instant de sa correction, le lien 135 véhicule un signal inhibant la lecture de la mémoire tampon 120.

On note que le moyen de détection et correction 130 peut aussi effectuer la correction de chaque erreur détectée par une reconfiguration partielle ou totale de la matrice du composant 105, à partir des données conservées dans la mémoire 140.

Dans le cas de la reconfiguration totale, la re-programmation totale du composant 105 est effectuée avec sa matrice de référence. Ceci a pour effet de corriger l'erreur et de réinitialiser le système. Les données de sortie du composant 105 sont alors restées erronées pendant une durée maximum correspondant au total du délai de détection d'erreur et du délai de redémarrage du système.

Dans le cas de la reconfiguration partielle, on effectue une correction locale de la matrice, dans la zone où a été détectée l'erreur. Cette reconfiguration ne nécessite pas de ré-initialisation du système. Après correction, le composant 105 reprend un fonctionnement normal. Les données de sortie du composant 105 sont alors erronées pendant une durée maximum correspondant au total du délai de détection de l'erreur et du délai de correction locale.

La mémoire tampon 120 permet une conservation pendant une durée limitée, ou « Bufferisation », des données générées par le composant 105 ou par des composants interfacés entre la mémoire tampon 120 et le composant 105. Préférentiellement, le délai de conservation des données dans la mémoire 120, ou latence, est supérieur ou égal au délai maximal de détection d'une erreur par le moyen de détection 130.

Préférentiellement, le moyen de détection et correction d'erreur 130 est adapté à détecter si une zone de la matrice de configuration du composant 105 représente une valeur binaire altérée (« upset »). En cas d'une telle détection, le moyen de détection est adapté, soit à interdire l'utilisation de cette zone de mémoire, c'est-à-dire à la désactiver, soit à procéder à la désactivation de la détection d'erreur. Dans les deux cas, il s'agit de débloquer le fonctionnement du système.

Préférentiellement, le moyen de détection et correction d'erreur 130 est adapté à compter les erreurs et à fournir un diagnostic (« BITE ») spécifique aux SEUs.

Bien que, dans la description d'un mode de réalisation particulier du dispositif objet de la présente invention, ci-dessus, le même moyen 130 réalise, à la fois les fonctions suivantes :
- la détection d'erreur dans le composant programmable 105 due à un rayonnement,
- le contrôle de blocage d'au moins une sortie du composant 105, lors de la détection d'une erreur et
- la correction de chaque erreur détectée,
- le contrôle de la reconfiguration totale ou partielle du composant 105,
- la détection de continuité d'une erreur,
- la désactivation d'une zone mémoire du composant pour interdire l'utilisation d'une zone mémoire comportant l'erreur continue, en cas de telle détection de continuité d'une erreur,
- la désactivation du moyen de détection d'erreur, en cas de telle détection de continuité d'une erreur et
- le diagnostic en comptant les erreurs détectées,
ces fonctions peuvent, dans d'autres modes de réalisation, être réalisées par une pluralité de moyens.

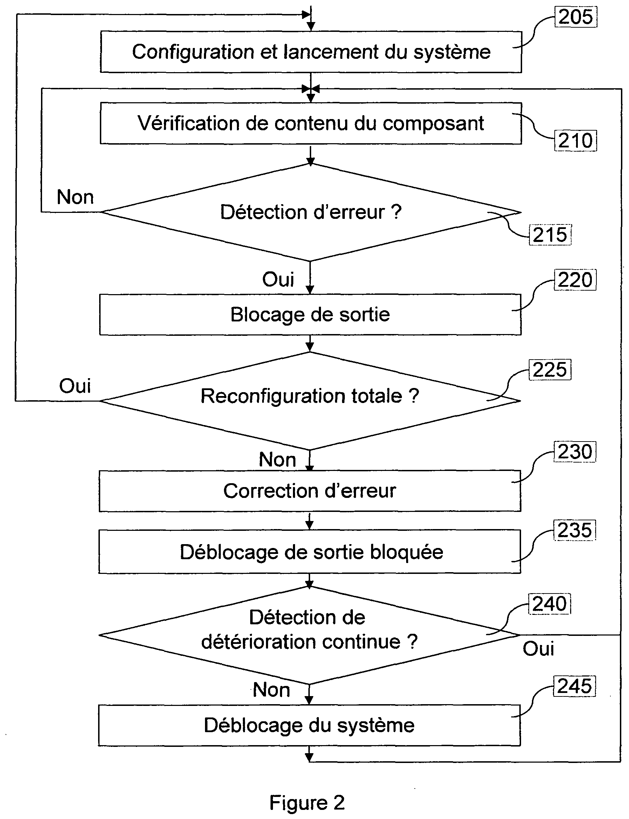

Comme on l'observe en figure 2, pour la mise en oeuvre d'un mode de réalisation particulier du procédé objet de la présente invention, on effectue, d'abord, de manière connue en soi, une étape 205 de configuration et de lancement du système. On note que si la détection et/ou la correction d'erreur utilisent au moins un espace de référence. Dès l'étape 205 et lors de toute écriture de données à protéger, on effectue chaque copie dans un espace de référence.

Puis, au cours d'une étape 210, on effectue un cycle de vérification des données à protéger conservées par le composant 105. Au cours d'une étape 215, on détermine si au moins une erreur a été détectée. Si non, on poursuit l'étape 210. Si une erreur a été détectée, au cours d'une étape 220, on effectue un blocage de la sortie des données issues du composant 105, ici en bloquant la lecture des données conservées par la mémoire tampon 120.

Puis, au cours d'une étape 225, on détermine si une reconfiguration totale va être effectuée, en fonction du mode de correction d'erreur mis en oeuvre par le moyen de détection et correction d'erreur 130. Si oui, on retourne à l'étape 205. Si non, au cours d'une étape 230, on effectue la correction d'erreur, par exemple en utilisant au moins une valeur de référence conservée dans un espace de référence ou une reconfiguration partielle. Puis, au cours d'une étape 235, on effectue un déblocage de la sortie bloquée au cours de l'étape 220. Le système est donc alors, de nouveau, opérationnel.

Au cours d'une étape 240, on détermine si une détérioration continue d'au moins une donnée binaire à protéger est constatée. Si non, on retourne à l'étape 210. Si oui, au cours d'une étape 245, on procède au déblocage du système. Par exemple, on interdit l'utilisation d'une zone de mémoire contenant la donnée continuellement erronée ou on arrête la vérification de contenu du composant. Ainsi, on effectue une détection de continuité d'une erreur et une désactivation d'une zone mémoire du composant pour interdire l'utilisation d'une zone mémoire comportant au moins une erreur continue. On interdit ainsi l'utilisation d'une partie de la mémoire endommagée irrémédiablement. En variante, lors de la détection de continuité d'une erreur bloquante, on désactive la détection d'erreur.

Comme on le comprend à la lecture de la description, la mise en oeuvre de la présente invention permet de réaliser une architecture de circuit tolérante aux erreurs et utilisant des composants sensibles aux radiations, par exemple des FPGA RAM-Based.

## Revendications

1. Dispositif permettant l'utilisation d'un composant programmable (105) réalisant au moins une fonction logique dans un environnement radiatif, qui comporte :
- un moyen (130) de détection d'erreur dans un espace mémoire de travail conservant des données servant effectivement à la réalisation de chaque dite fonction logique du dispositif,
- un moyen (130, 135, 120) de blocage d'au moins une sortie (125) d'au moins une fonction logique dudit composant pour laquelle une erreur dans les données mises en oeuvre par ladite fonction logique est détectée par ledit moyen de détection, et
- un moyen (130, 140) de correction de chaque erreur détectée dans ledit espace de travail ;
- les moyens de détection et de correction d'erreur utilisent des données conservées dans au moins un espace mémoire de référence conservant une copie de données mises en oeuvre par au moins une dite fonction logique ; **caractérisé en ce que**:
- le moyen (130, 135, 120) de blocage comporte un moyen de conservation possédant une latence supérieure ou égale au délai maximal de détection d'une erreur par le moyen de détection d'erreur, dans une mémoire tampon (120), de données générées par le composant et/ou par des composants interfacés entre le composant et la mémoire tampon.

2. Dispositif selon la revendication 1, **caractérisé en ce qu'**il comporte un moyen (130) de détection de continuité d'une erreur et un moyen de désactivation d'une zone mémoire du composant (105) adapté à interdire l'utilisation d'une zone mémoire comportant l'erreur continue, en cas de telle détection de continuité d'une erreur.

3. Dispositif selon l'une quelconque des revendications 1 à 2, **caractérisé en ce qu'**il comporte un moyen (130) de détection de continuité d'une erreur et un moyen (130) de désactivation du moyen de détection d'erreur, en cas de telle détection de continuité d'une erreur.

4. Dispositif selon l'une quelconque des revendications 2 ou 3, **caractérisé en ce que** le moyen (130) de détection de continuité d'une erreur comporte un moyen (130) de diagnostic adapté à compter les erreurs détectées par le moyen de détection d'erreur.

5. Dispositif selon l'une quelconque des revendications 1 à 4, **caractérisé en ce que** le composant programmable (105) n'a pas accès aux espaces mémoire de référence.

6. Dispositif selon l'une quelconque des revendications 1 à 5, **caractérisé en ce qu'**il comporte un moyen de permutation adapté à permuter l'espace mémoire de travail et un espace mémoire de référence à la suite d'un cycle de lecture complet des données à protéger sans détection d'erreur.

7. Dispositif selon l'une quelconque des revendications 1 à 6, **caractérisé en ce qu'**il comporte un moyen de permutation adapté à permuter l'espace mémoire de travail et un espace mémoire de référence à la suite de la détection d'une erreur dans l'espace mémoire de travail.

8. Procédé permettant l'utilisation d'un composant programmable réalisant au moins une fonction logique dans un environnement radiatif, qui comporte :
- une étape (210, 215) de détection d'erreur dans un espace mémoire de travail conservant des données servant effectivement à la réalisation de chaque dite fonction logique du dispositif,
- une étape (220) de blocage d'au moins une sortie (125) d'au moins chaque fonction logique dudit composant pour laquelle une erreur dans les données mises en oeuvre par ladite fonction logique est détectée au cours de ladite étape de détection, et
- une étape (225, 230) de correction de chaque erreur détectée dans ledit espace de travail ;
- les étapes de détection et de correction d'erreur utilisent des données conservées dans au moins un espace mémoire de référence conservant une copie de données mises en oeuvre par au moins une dite fonction logique ; **caractérisé en ce que**:
- on conserve dans une mémoire tampon (120) pendant un temps de latence supérieure ou égale au délai maximal de l'étape de détection d'erreur, des données générées par le composant et/ou par des composants interfacés entre le composant et la mémoire tampon.

9. Procédé selon la revendication 8, **caractérisé en ce qu'**il comporte une étape de détection de continuité d'une erreur et, pour au moins une partie des détections de continuité d'une erreur, une étape de désactivation d'une zone mémoire du composant (105) interdisant l'utilisation d'une zone mémoire comportant l'erreur continue.

10. Procédé selon l'une quelconque des revendications 8 à 9, **caractérisé en ce qu'**il comporte une étape de détection de continuité d'une erreur et, pour au moins une partie des détections de continuité d'une erreur, une étape de désactivation du moyen de détection d'erreur, en fonction d'un nombre d'erreurs détectées.

11. Procédé selon l'une quelconque des revendications 8 à 10, **caractérisé en ce qu'**il comporte une étape de permutation de l'espace mémoire de travail et d'un espace mémoire de référence à la suite d'un cycle de lecture complet des données à protéger sans détection d'erreur.

12. Procédé selon l'une quelconque des revendications 8 à 11, **caractérisé en ce qu'**il comporte une étape de permutation de l'espace mémoire de travail et d'un espace mémoire de référence à la suite de la détection d'une erreur dans l'espace mémoire de travail.

## Patentansprüche

1. Vorrichtung, welche die Verwendung einer programmierbaren Komponente (105), die wenigstens eine logische Funktion ausführt, in einer Strahlungsumgebung ermöglicht und welche aufweist:
- ein Mittel (130) zur Fehlererkennung in einem Arbeitsspeicherraum, der Daten aufbewahrt, die tatsächlich der Ausführung jeder besagten logischen Funktion der Vorrichtung dienen,
- ein Mittel (130, 135, 120) zur Blockierung wenigstens eines Ausgangs (125) wenigstens einer logischen Funktion der Komponente, für welche ein Fehler in den Daten, die von dieser logischen Funktion implementiert wurden, durch das Erkennungsmittel erkannt wurde, und
- ein Mittel (130, 140) zur Korrektur jedes Fehlers, der in dem Arbeitsraum erkannt wurde;
- wobei die Mittel zur Fehlererkennung und Fehlerkorrektur Daten verwenden, die in wenigstens einem Referenzspeicherraum aufbewahrt werden, der eine Kopie von Daten aufbewahrt, die von wenigstens einer besagten logischen Funktion implementiert wurden; **dadurch gekennzeichnet, dass**:
- das Mittel (130, 135, 120) zur Blockierung ein Mittel zur Aufbewahrung, in einem Pufferspeicher (120), von Daten, die von der Komponente und/oder von zwischen die Komponente und den Pufferspeicher gekoppelten Komponenten erzeugt wurden, aufweist, das eine Latenz besitzt, die größer oder gleich der maximalen Verzögerung der Erkennung eines Fehlers durch das Mittel zur Fehlererkennung ist.

2. Vorrichtung nach Anspruch 1, **dadurch gekennzeichnet, dass** sie ein Mittel (130) zur Erkennung des Fortbestehens eines Fehlers und ein Mittel zur Deaktivierung eines Speicherbereichs der Komponente (105), das dafür ausgelegt ist, im Falle einer solchen Erkennung des Fortbestehens eines Fehlers die Verwendung eines den fortbestehenden Fehler aufweisenden Speicherbereichs zu verbieten, aufweist.

3. Vorrichtung nach einem der Ansprüche 1 bis 2, **dadurch gekennzeichnet, dass** sie ein Mittel (130) zur Erkennung des Fortbestehens eines Fehlers und ein Mittel (130) zur Deaktivierung des Mittels zur Fehlererkennung im Falle einer solchen Erkennung des Fortbestehens eines Fehlers aufweist.

4. Vorrichtung nach einem der Ansprüche 2 oder 3, **dadurch gekennzeichnet, dass** das Mittel (130) zur Erkennung des Fortbestehens eines Fehlers ein Diagnosemittel (130) aufweist, das dafür ausgelegt ist, die Fehler zu zählen, die von dem Mittel zur Fehlererkennung erkannt wurden.

5. Vorrichtung nach einem der Ansprüche 1 bis 4, **dadurch gekennzeichnet, dass** die programmierbare Komponente (105) keinen Zugriff auf die Referenzspeicherräume hat.

6. Vorrichtung nach einem der Ansprüche 1 bis 5, **dadurch gekennzeichnet, dass** sie ein Permutationsmittel aufweist, das dafür ausgelegt ist, im Anschluss an einen vollständigen Lesezyklus der zu schützenden Daten ohne Erkennung eines Fehlers den Arbeitsspeicherraum und einen Referenzspeicherraum zu permutieren.

7. Vorrichtung nach einem der Ansprüche 1 bis 6, **dadurch gekennzeichnet, dass** sie ein Permutationsmittel aufweist, das dafür ausgelegt ist, im Anschluss an die Erkennung eines Fehlers in dem Arbeitsspeicherraum den Arbeitsspeicherraum und einen Referenzspeicherraum zu permutieren.

8. Verfahren, welches die Verwendung einer programmierbaren Komponente, die wenigstens eine logische Funktion ausführt, in einer Strahlungsumgebung ermöglicht und welches aufweist:
- einen Schritt (210, 215) der Fehlererkennung in einem Arbeitsspeicherraum, der Daten aufbewahrt, die tatsächlich der Ausführung jeder besagten logischen Funktion der Vorrichtung dienen,
- einen Schritt (220) der Blockierung wenigstens eines Ausgangs (125) wenigstens jeder logischen Funktion der Komponente, für welche ein Fehler in den Daten, die von dieser logischen Funktion implementiert wurden, während des Erkennungsschrittes erkannt wurde, und
- einen Schritt (225, 230) der Korrektur jedes Fehlers, der in dem Arbeitsraum erkannt wurde;
- wobei die Schritte der Fehlererkennung und Fehlerkorrektur Daten verwenden, die in wenigstens einem Referenzspeicherraum aufbewahrt werden, der eine Kopie von Daten aufbewahrt, die von wenigstens einer besagten logischen Funktion implementiert wurden; **dadurch gekennzeichnet, dass**:
- in einem Pufferspeicher (120) während einer Latenzzeit, die größer oder gleich der maximalen Verzögerung des Schrittes der Fehlererkennung ist, Daten aufbewahrt werden, die von der Komponente und/oder von zwischen die Komponente und den Pufferspeicher gekoppelten Komponenten erzeugt wurden.

9. Verfahren nach Anspruch 8, **dadurch gekennzeichnet, dass** es einen Schritt der Erkennung des Fortbestehens eines Fehlers und, für wenigstens einen Teil der Erkennungen des Fortbestehens eines Fehlers, einen Schritt der Deaktivierung eines Speicherbereichs der Komponente (105) aufweist, welcher die Verwendung eines den fortbestehenden Fehler aufweisenden Speicherbereichs verbietet.

10. Verfahren nach einem der Ansprüche 8 bis 9, **dadurch gekennzeichnet, dass** es einen Schritt der Erkennung des Fortbestehens eines Fehlers und, für wenigstens einen Teil der Erkennungen des Fortbestehens eines Fehlers, einen Schritt der Deaktivierung des Mittels zur Fehlererkennung in Abhängigkeit von einer Anzahl erkannter Fahler aufweist.

11. Verfahren nach einem der Ansprüche 8 bis 10, **dadurch gekennzeichnet, dass** es einen Schritt der Permutation des Arbeitsspeicherraumes und eines Referenzspeicherraumes im Anschluss an einen vollständigen Lesezyklus der zu schützenden Daten ohne Erkennung eines Fehlers aufweist.

12. Verfahren nach einem der Ansprüche 8 bis 11, **dadurch gekennzeichnet, dass** es einen Schritt der Permutation des Arbeitsspeicherraumes und eines Referenzspeicherraumes im Anschluss an die Erkennung eines Fehlers in dem Arbeitsspeicherraum aufweist.

## Claims

1. Device allowing the use of a programmable component (105) carrying out at least one logic function in a radiative environment, which comprises:
- a means (130) of error detection in a work memory space preserving data actually serving for carrying out each said logic function of the device,
- a means (130, 135, 120) for blocking at least one output (125) of at least one logic function of the said component, for which an error in the data implemented by the said logic function is detected by the said detection means, and
- a means (130, 140) for correcting each error detected in the said work space;
- the means of error detection and correction use data preserved in at least one reference memory space preserving a copy of data implemented by at least one said logic function; **characterised in that**:
- the means (130, 135, 120) of blocking comprises a means of preservation possessing a latency greater than or equal to the maximum lag in detecting an error by the error detecting means, in a buffer memory (120), of data generated by the component and/or by components interfaced between the component and the buffer memory.

2. Device according to claim 1, **characterised in that** it comprises a means (130) for detecting continuity of an error and a means for deactivating a memory area of the component (105) suitable for prohibiting the use of a memory area comprising the continuous error, in case of such detection of continuity of an error.

3. Device according to either one of claims 1 to 2, **characterised in that** it comprises a means (130) for detecting continuity of an error and a means (130) for deactivating the error detecting means, in case of such detection of continuity of an error.

4. Device according to either one of claims 2 or 3, **characterised in that** the means (130) for detecting continuity of an error comprises a means (130) of diagnosis suitable for counting the errors detected by the error detecting means.

5. Device according to any one of claims 1 to 4, **characterised in that** the programmable component (105) does not have access to the reference memory spaces.

6. Device according to any one of claims 1 to 5, **characterised in that** it comprises a swapping means suitable for swapping the work memory space and a reference memory space subsequent to a complete cycle of reading of the data to be protected without error detection.

7. Device according to any one of claims 1 to 6, **characterised in that** it comprises a swapping means suitable for swapping the work memory space and a reference memory space subsequent to the detection of an error in the work memory space.

8. Method allowing the use of a programmable component carrying out at least one logic function in a radiative environment, which comprises:
- a step (210, 215) of error detection in a work memory space preserving data actually serving for carrying out each said logic function of the device,
- a step (220) of blocking at least one output (125) of at least each logic function of the said component, for which an error in the data implemented by the said logic function is detected in the course of the said detection step, and
- a step (225, 230) of correcting each error detected in the said work space;
- the steps of error detection and correction use data preserved in at least one reference memory space preserving a copy of data implemented by at least one said logic function; **characterised in that**:
- data generated by the component and/or by components interfaced between the component and a buffer memory (120) are preserved in said buffer memory for a latency time greater than or equal to the maximum lag of the error detecting step.

9. Method according to claim 8, **characterised in that** it comprises a step of detection of continuity of an error and, for at least some of the detections of continuity of an error, a step of deactivating a memory area of the component (105) prohibiting the use of a memory area comprising the continuous error.

10. Method according to either one of claims 8 to 9, **characterised in that** it comprises a step of detection of continuity of an error and, for at least some of the detections of a continuity of an error, a step of deactivating the error detecting means, as a function of a number of detected errors.

11. Method according to any one of claims 8 to 10, **characterised in that** it comprises a step of swapping the work memory space and a reference memory space subsequent to a complete cycle of reading of the data to be protected without error detection.

12. Method according to any one of claims 8 to 11, **characterised in that** it comprises a step of swapping the work memory space and a reference memory space subsequent to the detection of an error in the work memory space.
